# EUROPÄISCHE PATENTANMELDUNG

(11) **EP 0 808 088 A1**
(43) Veröffentlichungstag der Anmeldung: **19.11.1997**
(21) Anmeldenummer: 96107851.6
(22) Anmeldetag: 17.05.1996
(51) Int. Cl.: H05K 7/00, G01K 1/14, H01H 37/04, H01H 37/34

(54) **Anordnung zur Montage einer Baugruppe**

(71) Anmelder: ETHECO European Thermostat Company S.p.A., 84131 Salerno (IT)
(72) Erfinder: Reifers, Alfred, 8910 Affoltern (CH); Kramer, Johannes, 6300 Zug (CH); Moser, Andres, 6312 Steinhausen (CH)
(74) Vertreter: Fraipont, Oskar

(57) **Zusammenfassung**

Die Baugruppe (1a) ist mindestens teilweise in einem dosenförmigen Träger (1b) angeordnet, der nach aussen hin so ausgebildet und mit Montagemitteln versehen ist, dass er sowohl in einem Schutzgehäuse als auch auf eine Tragschiene (2) montierbar ist. Die Baugruppe (1a) aussen und der dosenförmige Träger (1b) innen sind so ausgebildet, dass die Baugruppe (1a) gleitend mindestens teilweise in den dosenförmigen Träger (1b) steckbar und dort in ihrer Endposition einschnappbar ist. Der dosenförmige Träger (1b) weist auf seiner Rückseite mindestens ein Schnappverschlussteil (4) auf zum Aufschnappen des dosenförmigen Trägers (1b) auf die Tragschiene (2). Die Baugruppe (1a) ist vorzugsweise ein Temperaturregler, ein Temperaturwächter oder ein Sicherheits-Temperaturbegrenzer. Weitere Vorteile sind eine mögliche, vor Ort vom Anwender veränderbare Anschlagbegrenzung eines Einstellmittels zur Einstellung eines Parameters, z. B. der Temperatur, eine Möglichkeit die Baugruppe mit einer Signallampe zu bestücken zwecks Anzeige z. B. der Position eines in der Baugruppe enthaltenen Umschalters und die Möglichkeit einer Rückstellung der Baugruppe mittels eines Rückstellhebels.

## Beschreibung

Die Erfindung bezieht sich auf eine Anordnung zur Montage einer Baugruppe gemäss dem Oberbegriff des Anspruchs 1.

Die Baugruppe ist vorzugsweise ein Temperaturregler, ein Temperaturwächter oder ein Sicherheits-Temperaturbegrenzer und ist dann mit einem Kapillarrohr versehen, an dessen einem Ende ein Fühler, bevorzugt ein länglicher stabförmiger Temperaturfühler, angeschlossen ist. Der Sicherheits-Temperaturbegrenzer dient z. B. zur Sicherheitsabschaltung von Wärmeerzeugern bei defekter Regulierung oder als Abgas-Temperaturbegrenzer zum Schutz von Kunststoffrohren und kann nur manuell wieder eingeschaltet werden. Im letzteren Fall ist der Temperaturfühler z. B. in der Wand des Kullststoffrohrs montiert und erfasst die Temperatur der Abgase innerhalb des Kunststoffrohrs. Der Temperaturregler dient z. B. der Regulierung von Wärmeerzeugern und ist z.B. ein Raumtemperaturregler, der eine Raumtemperatur regelt, wobei der Temperaturfühler in diesem Fall die Raumtemperatur erfasst. Der Temperaturwächter dient z. B. der Überwachung von Wärmeerzeugern. Die Baugruppe enthält in der Regel mindestens ein elektrisches, mit elektrischen Anschlüssen versehenes Bauteil sowie oft einen Masseanschluss, wobei an den Anschlüssen elektrische Leiter anschliessbar sind. Das elektrische Hauteil ist z. B. ein einpoliger Umschalter. Der Sicherheits-Temperaturbegrenzer muss sowohl bruchsicher als auch eigensicher sein, d. h. ein Kapillarrohrbruch führt zum Öffnen des Lastkreises. Der Temperaturregler und der Temperaturwächter können dagegen eigensicher oder nicht eigensicher sein. Alle Baugruppen müssen den Normvorschriften DIN 3440 und EN 60 730-1 bzw. EN 60 730-2-9 genügen.

Der Erfindung liegt die Aufgabe zugrunde, eine Anordnung der eingangs genannten Art zu realisieren, welche eine Montage einer Baugruppe sowohl in einem Schutzgehäuse als auch, ohne Schutzgehäuse, auf einer Tragschiene ermöglicht, welche letztere z. B. in einem Schaltschrank vorhanden ist, wobei in allen Fällen berührungssichere Klemmenanschlüsse der Baugruppe sichergestellt sein müssen, welche die Normvorschrift EN 60 730-1 erfüllen. Weitere Vorteile sind eine mögliche, vor Ort vom Anwender veränderbare Anschlagbegrenzung eines Einstellmittels zur Einstellung eines Parameters, z. B. der Temperatur, eine Möglichkeit die Baugruppe mit einer Signallampe zu bestücken zwecks Anzeige z. B. der Position eines in der Baugruppe enthaltenen Umschalters und die Möglichkeit einer Rückstellung der Baugruppe.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: einen Längsschnitt I-I einer erfindungsgemässen Anordnung mit einer angedeuteten Montage auf einer Tragschiene,
- Fig. 2: eine Vorderansicht der erfindungsgemässen Anordnung,
- Fig. 3: eine Draufsicht der erfindungsgemässen Anordnung,
- Fig. 4: eine Draufsicht eines Drehknopfes und
- Fig. 5: einen Querschnitt des Drehknopfes.

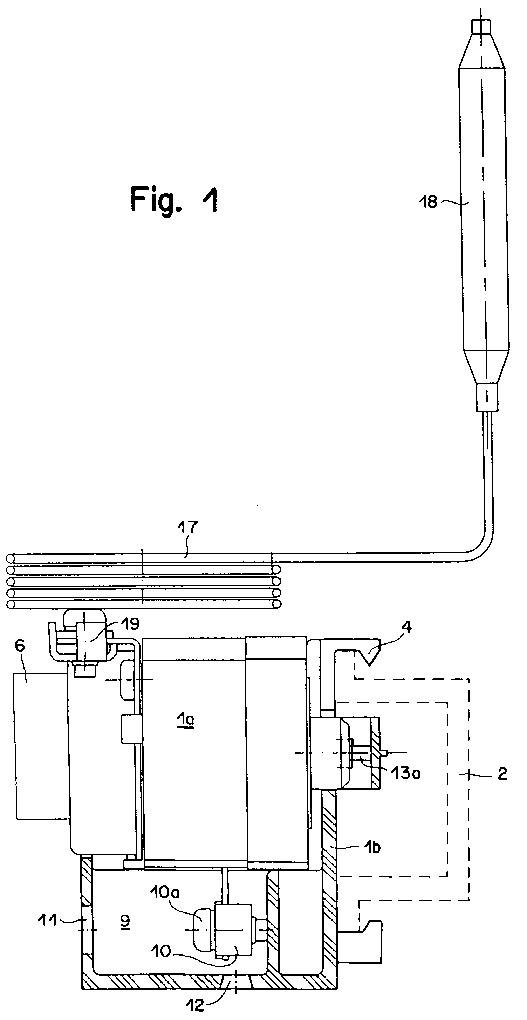

Eine Baugruppe 1a ist vorzugsweise ein Temperaturregler, ein Temperaturwächter oder ein Sicherheits-Temperaturbegrenzer. Sie ist mindestens teilweise in einem dosenförmigen Träger 1b angeordnet, der nach aussen hin so ausgebildet und mit Montagemitteln versehen ist, dass er sowohl in einem Schutzgehäuse als auch auf eine Tragschiene 2 montierbar ist (siehe Fig. 1). Die Baugruppe 1a wird also durch Steckmontage, mit einem Einschnappen in der Endposition, in den dosenförmigen Träger 1b vormontiert. Die Gesamtanordnung, bestehend aus der Baugruppe 1a und den dosenförmigen Träger 1b, ermöglicht mehrere Montagearten, nämlich eine Montage in einem Schutzgehäuse und eine Montage auf eine Norm-Tragschiene 2 von z. B. 35mm x15 mm.

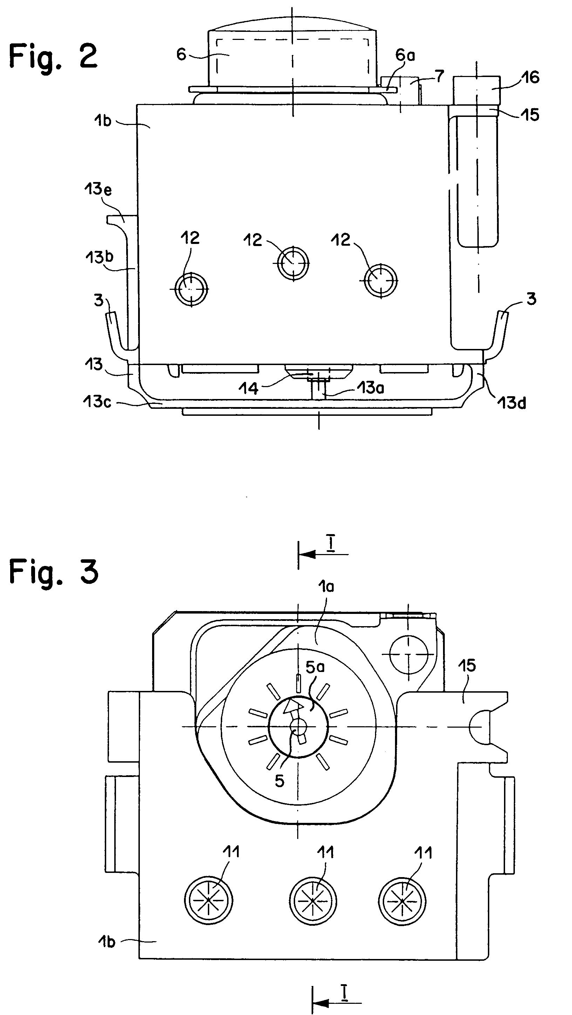

Die Baugruppe 1a aussen und der dosenförmige Träger 1b innen sind so ausgebildet, dass die Baugruppe 1a gleitend mindestens teilweise in den dosenförmigen Träger 1b steckbar und dort in ihrer Endposition einschnappbar ist. Der dosenförmige Träger 1b weist aussen mindestens ein Schnappverschlussteil 3 auf (siehe Fig. 2), mit dessen Hilfe der dosenförmige Träger 1b auf mindestens eine Wand eines in der Zeichnung nicht dargestellten dosenförmigen Rückenteils eines Schutzgehäuses aufschnappbar montierbar ist. Die betreffende Wand weist dann jeweils mindestens ein Gegenstück zum Schnappverschlussteil 3 des dosenförmigen Trägers 1b auf. Der letztere weist aussen vorzugsweise auf zwei gegenüberliegenden Seiten je einen solchen Schnappverschlussteil 3 auf zum Aufschnappen des dosenförmigen Trägers 1b auf zwei gegenüberliegenden Wänden des dosenförmigen Rückenteils des Schutzgehäuses. Die Schnappverschlussteile 3 des dosenförmigen Trägers 1b sind bevorzugt seitlich vorstehend angeordnet. Der dosenförmige Träger 1b weist ausserdem auf seiner Rückseite als Bestandteil oder als separates Teil mindestens ein Schnappverschlussteil 4 auf zum Aufschnappen des dosenförmigen Trägers 1b auf die Tragschiene 2 (siehe Fig. 1).

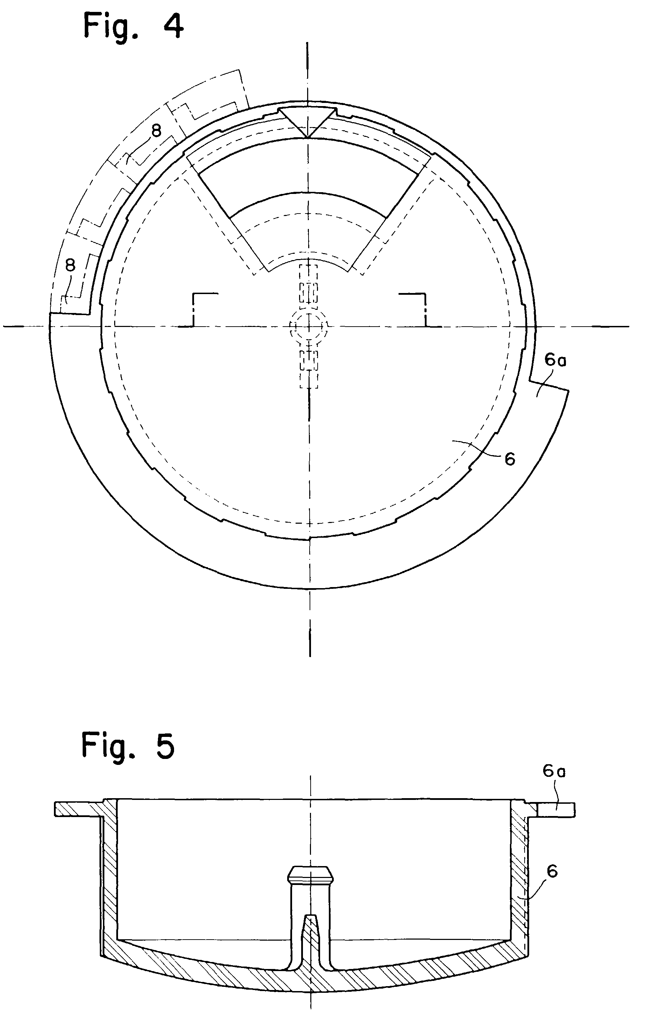

Ein Parameter, z. B. eine Temperatur, ist mittels eines um eine Achse 5 drehbaren Bauteils 5a oder 6 einstellbar, welches auf einer Vorderseite der Baugruppe 1a angeordnet ist und welches im Falle des Bauteils 6 zur Anschlagbegrenzung seines Drehbereichs ein vor Ort vom Anwender einstellbaren vorstehenden Teil 6a aufweist. Die Vorderseite der Baugruppe 1a weist zur Begrenzung des Drehbereichs des drehbaren Bauteils 6 einen Anschlag 7 auf, der so angeordnet ist, dass in den Endpositionen des Drehbereichs das vorstehende Teil 6a des drehbaren Bauteils 6 in Kontakt mit dem Anschlag 7 ist. Das vorstehende Teil 6a des drehbaren Bauteils 6 weist zur Einstellung oder Veränderung von dessen Drehbereich als Bereichsbegrenzung vorgeformte Ausbruchstellen 8 auf. Das drehbare Bauteil 5a ist vorzugsweise eine Einstellscheibe und das drehbare Bauteil 6 ist bevorzugt ein auf die Achse 5 steckbares Einstellelement, wie z. B. ein Einstellknopf (siehe Fig. 4 und Fig. 5). Der Einstellknopf hat z. B. die Gestalt eines zylinderförmigen Hutes mit Krempe, wobei die letztere den vorstehenden Teil 6a bildet.

Ein Boden des dosenförmigen Trägers 1b weist eine oder mehrere elektrisch isolierte Kammern 9 auf zur jeweiligen Aufnahme einer elektrischen Anschlussklemme 10 der Baugruppe 1a. Die Vorderseite und der Boden der Kammern 9 weisen jeweils je eine Durchlassöffnung 11 bzw. 12 auf. In der Zeichnung gilt die Annahme, dass pro Anschluss eines in der Baugruppe 1a vorhandenen einpoligen Umschalters eine Kammer vorhanden ist. Es sind dann drei Kammern 9, drei Durchlassöffnungen 11 und drei Durchlassöffnungen 12 vorhanden. Die letzteren dienen dem Durchlass je einer elektrischen Verbindung, während die Durchlassöffnungen 11 dem Durchlass eines Schraubenziehers dienen zum Lösen oder Festziehen einer Schraube 10a der zugehörigen Anschlussklemme 10.

Der dosenförmige Träger 1b besitzt als Bestandteil oder als separates Teil einen Rückstellhebel 13 (siehe Fig. 2), der zur Rückstellung der Baugruppe 1a einen Zapfen 13a aufweist. Der Rückstellhebel 13 ist ein in der Draufsicht U-förmiger, z. B unsymmetrischer Rückstellhebel, dessen Kanten annähernd rechtwinklig abgebogen sind und dessen drei Stege 13b, 13c und 13d aussen parallel zu je einer von drei Seiten des dosenförmigen Trägers 1b verlaufen. Ein Quersteg 13c der drei Stege des U-förmigen Rückstellhebels 13 verläuft aussen parallel zur Rückwand des dosenförmigen Trägers 1b und ist über einen kürzeren zweiten Steg 13d der drei Stege auf einer Seite der Rückwand des dosenförmigen Trägers 1b befestigt, während ein längerer dritter Steg 13b der drei Stege auf einer gegenüberliegenden Seite der Rückwand parallel zu einer dort befindlichen Seitenwand des dosenförmigen Trägers 1b verläuft und als Griff 13e ausgebildet ist. Der Zapfen 13a des Rückstellhebels 13 ist senkrecht zu einer Rückwand des dosenförmigen Trägers 1b so angeordnet, dass bei einer Betätigung des Rückstellhebels 13 ein in Verlängerung des Zapfens 13a in der Rückwand der Baugruppe 1a angeordneter Bolzen 14 zwecks Rückstellung der Baugruppe 1a betätigt wird. Der Bolzen 14 befindet sich bei einer Nichtbetätigung des Rückstellhebels 13 unter Einfluss einer in seiner Verlängerung innerhalb der Baugruppe 1a angeordneten Feder in seiner Ruheposition.

Eine Wand, z. B. eine seitliche Wand, des dosenförmigen Trägers 1b weist eine Montagemöglichkeit 15 für eine Signallampe 16 auf. Die Baugruppe 1a kann somit jederzeit vor Ort vom Anwender mit einer Signallampe 16 nachgerüstet werden.

An der Baugruppe 1a ist ein abwickelbares aufgerolltes Kapillarrohr 17 angeschlossen, dessen Ende mit einem Temperaturfühler 18 versehen ist (siehe Fig. 1). Die Baugruppe 1a besitzt in der Regel auch eine Masse-Anschlussklemme 19.

## Patentansprüche

1. Anordnung zur Montage einer Haugruppe (1a), dadurch gekennzeichnet, dass die Baugruppe (1a) mindestens teilweise in einem dosenförmigen Träger (1b) angeordnet ist, der nach aussen hin so ausgebildet und mit Montagemitteln versehen ist, dass er sowohl in einem Schutzgehäuse als auch auf eine Tragschiene (2) montierbar ist.

2. Anordnung nach Anspruch 1, dadurch gekennzeichnet, dass die Baugruppe (1a) aussen und der dosenförmige Träger (1b) innen so ausgebildet sind, dass die Baugruppe (1a) gleitend mindestens teilweise in den dosenförmigen Träger (1b) steckbar und dort in ihrer Endposition einschnappbar ist.

3. Anordnung nach Anspruch 1 oder 2, dadurch gekennzeichnet, dass der dosenförmige Träger (1b) aussen mindestens ein Schnappverschlussteil (3) aufweist, mit dessen Hilfe der dosenförmige Träger (1b) auf mindestens eine Wand eines dosenförmigen Rückenteils eines Schutzgehäuses aufschnappbar montierbar ist, welche Wand jeweils ein Gegenstück zum Schnappverschlussteil (3) des dosenförmigen Trägers (1b) aufweist.

4. Anordnung nach Anspruch 3, dadurch gekennzeichnet, dass der dosenförmige Träger (1b) aussen auf zwei gegenüberliegenden Seiten je ein Schnappverschlussteil (3) aufweist zum Aufschnappen des dosenförmigen Trägers (1b) auf zwei gegenüberliegenden Wänden eines dosenförmigen Rückenteils des Schutzgehäuses.

5. Anordnung nach Anspruch 4, dadurch gekennzeichnet, dass die Schnappverschlussteile (3) des dosenförmigen Trägers (1b) seitlich vorstehend angeordnet sind.

6. Anordnung nach einem der Ansprüche 1 bis 5, dadurch gekennzeichnet, dass ein Parameter mittels eines um eine Achse (5) drehbaren Hauteils (5a) einstellbar ist, welches auf einer Vorderseite der Baugruppe (1a) angeordnet ist.

7. Anordnung nach einem der Ansprüche 1 bis 6, dadurch gekennzeichnet, dass ein Parameter mittels eines um eine Achse (5) drehbaren Bauteils (6) einstellbar ist, welches auf einer Vorderseite der Baugruppe (1a) angeordnet ist und zur Begrenzung seines Drehbereichs ein vor Ort einstellbaren vorstehenden Teil (6a) aufweist, und dass die Vorderseite der Baugruppe (1a) zur Begrenzung des Drehbereichs des drehbaren Bauteils (6) einen Anschlag (7) aufweist, der so angeordnet ist, dass in den Endpositionen des Drehbereichs das vorstehende Teil (6a) des drehbaren Bauteils (6) in Kontakt mit dem Anschlag (7) ist.

8. Anordnung nach Anspruch 7, dadurch gekennzeichnet, dass das vorstehende Teil (6a) des drehbaren Bauteils (6) zur Einstellung von dessen Drehbereich vorgeformte Ausbruchstellen (8) aufweist.

9. Anordnung nach einem der Ansprüche 1 bis 8, dadurch gekennzeichnet, dass ein Boden des dosenförmigen Trägers (1b) eine oder mehrere elektrisch isolierte Kammern (9) aufweist zur jeweiligen Aufnahme einer elektrischen Anschlussklemme (10) der Baugruppe (1a), wobei die Vorderseite und der Boden der Kammer je eine Durchlassöffnung (11, 12) aufweisen.

10. Anordnung nach einem der Ansprüche 1 bis 9, dadurch gekennzeichnet, dass der dosenförmige Träger (1b) einen Rückstellhebel (13) besitzt, der zur Rückstellung der Baugruppe (1a) einen Zapfen (13a) aufweist.

11. Anordnung nach Anspruch 10, dadurch gekennzeichnet, dass der Rückstellhebel (13) ein in der Draufsicht U-förmiger Rückstellhebel ist, dessen Kanten annähernd rechtwinklig abgebogen sind und dessen drei Stege (13b, 13c, 13d) aussen parallel zu je einer von drei Seiten des dosenförmigen Trägers (1b) verlaufen.

12. Anordnung nach Anspruch 11, dadurch gekennzeichnet, dass ein Quersteg (13c) der drei Stege des U-förmigen Rückstellhebels aussen parallel zur Rückwand des dosenförmigen Trägers (1b) verläuft und über einen kürzeren zweiten Steg (13d) der drei Stege auf einer Seite der Rückwand des dosenförmigen Trägers (1b) befestigt ist, während ein längerer dritter Steg (13b) der drei Stege auf einer gegenüberliegenden Seite der Rückwand parallel zu einer dort befindlichen Seitenwand des dosenförmigen Trägers (1b) verläuft und als Griff (13e) ausgebildet ist.

13. Anordnung nach einem der Ansprüche 10 bis 12, dadurch gekennzeichnet, dass der Zapfen (13a) des Rückstellhebels (13) senkrecht zu einer Rückwand des dosenförmigen Träger (1b) so angeordnet ist, dass bei einer Betätigung des Rückstellhebels (13) ein in Verlängerung des Zapfens (13a) in der Rückwand der Baugruppe (1a) angeordneter Bolzen (14) zwecks Rückstellung der Baugruppe (1a) betätigt wird.

14. Anordnung nach Anspruch 13, dadurch gekennzeichnet, dass der Bolzen (14) bei einer Nichtbetätigung des Rückstellhebels (13) unter Einfluss einer in seiner Verlängerung innerhalb der Baugruppe (1a) angeordneten Feder sich in seiner Ruheposition befindet.

15. Anordnung nach einem der Ansprüche 1 bis 14 dadurch gekennzeichnet, dass eine Wand des dosenförmigen Trägers (1b) eine Montagemöglichkeit (15) für eine Signallampe (16) aufweist.

16. Anordnung nach Anspruch 1, dadurch gekennzeichnet, dass der dosenförmige Träger (1b) auf seiner Rückseite mindestens ein Schnappverschlussteil (4) aufweist zum Aufschnappen des dosenförmigen Trägers (1b) auf die Tragschiene (2).

17. Anordnung nach einem der Ansprüche 1 bis 16 dadurch gekennzeichnet, dass die Baugruppe (1a) ein Temperaturregler, ein Temperaturwächter oder ein Sicherheits-Temperaturbegrenzer ist.
